# EUROPÄISCHE PATENTSCHRIFT

(11) **EP 2 568 570 B1**
(45) Veröffentlichungstag und Bekanntmachung des Hinweises auf die Patenterteilung: **23.11.2016**
(21) Anmeldenummer: 12005777.3
(22) Anmeldetag: 09.08.2012
(51) Int. Cl.: H02J 9/06, H05B 33/08, G08B 7/06

(54) **Beleuchtungseinrichtung**
Illumination device
Dispositif d'éclairage

(30) Priorität: 07.09.2011 AT 12792011
(43) Veröffentlichungstag der Anmeldung: 13.03.2013
(73) Patentinhaber: NEULICHT lighting solutions GmbH, 6845 Hohenems (AT)
(72) Erfinder: Geiginger, Joachim, 6845 Hohenems (AT); Horvat, Stanislav, 6890 Lustenau (AT)
(74) Vertreter: Hofmann, Ralf U.

(56) Entgegenhaltungen:
- EP-A2- 2 034 587
- WO-A1-2010/139080
- WO-A1-2011/124723
- DE-U1-202008 002 883
- US-A1- 2010 277 070
- US-A1- 2011 133 649
- US-B2- 7 690 802
- "ONLITE SICHERHEITSBELEUCHTUNG PRODUKTBROSCHUERE", INTERNET CITATION, 28. Februar 2003 (2003-02-28), XP002351213, Gefunden im Internet: URL:http://web.archive.org/web/20040321222 020/www.zumtobelstaff.com/onlite/images/di verses/PB_Onlite_DE.pdf [gefunden am 2005-10-25]

## Beschreibung

Die Erfindung bezieht sich auf eine Beleuchtungseinrichtung mit einer Mehrzahl von Leuchten, die Leuchtdioden als Leuchtmittel aufweisen und die in einem Normalbetrieb von einem gemeinsamen, an Netzspannung anzuschließenden Betriebsgerät mit einer Betriebsspannung versorgt werden, welche den Leuchten als Eingangsspannung zugeführt wird, wobei das Betriebsgerät für den Fall eines Ausfalls der Netzspannung eine Batterie zur Aufrechterhaltung eines Notbetriebs aufweist und den Leuchten im Notbetrieb vom Betriebsgerät als Eingangsspannung eine Notbetriebsspannung zugeführt wird, die eine Gleichspannung ist.

Beleuchtungseinrichtungen, bei denen bei Ausfall der Netzspannung ein Notbetrieb der Leuchten aufrechterhalten wird, welche hierfür aus einer wiederaufladbaren Batterie gespeist werden, sind bekannt.

Bei einer bekannten Beleuchtungseinrichtung mit einer derartigen Notlichtfunktion werden mit Netz-Wechselspannung betriebene Leuchten eingesetzt. Ein zentrales Betriebsgerät, über welches die Versorgung der Leuchten erfolgt, umfasst eine Batterie, beispielsweise mit einer Nennspannung von 200 Volt Gleichspannung. Wenn die Netzspannung von beispielsweise 230 Volt ausfällt, wird die Gleichspannung der Batterie auf die Leuchten geschaltet. Die Leuchten weisen jeweils eine Erkennungseinheit auf, die die Art der anliegenden Spannung und somit den Wechsel von Wechselspannung zu Gleichspannung detektiert. Wird erkannt, dass eine Gleichspannung anliegt, so wird die Leistung der Leuchte und somit der von der Leuchte abgegebene Lichtstrom zur Schonung der Batterie reduziert. Als Leuchtmittel werden hierbei Leuchtstoffröhren, Hochdrucklampen oder Halogenlampen eingesetzt. Auch der Einsatz von Leuchtdioden als Leuchtmittel ist bei einer derartigen Beleuchtungseinrichtung bereits bekannt, wobei eine jeweilige Leuchte eine Mehrzahl von Leuchtdioden aufweist. In einer jeweiligen Leuchte wird die der Leuchte zugeführte Eingangsspannung (Netzwechselspannung im Normalbetrieb, Gleichspannung im Notbetrieb) in die für den Betrieb der Leuchtdioden erforderliche Spannung gewandelt. Die jeweilige Leuchtenelektronik umfasst hierbei eine Stromquelle, welche die üblicherweise in Serie geschalteten Leuchtdioden mit einem vorgegebenen, konstanten Strom versorgt.

Eine Beleuchtungseinrichtung mit den Merkmalen des Oberbegriffs des Anspruchs 1 geht beispielsweise aus der Produktbroschüre "ONLITE Sicherheitsbeleuchtung" XP002351213 hervor.

Aus der WO 2010/139080 A1 geht eine Leuchte mit einer Mehrzahl von Leuchtdioden als Leuchtmittel hervor, welche im Falle eines Netzausfalls einen Notbetrieb mit einer reduzierten Leistung aufweist. Zur Versorgung der Leuchtdioden im Notbetrieb dient ein in die Leuchte eingebauter Akku.

Aus der US 2011/0133649 A1 gehen LED-Lampen und eine Umgebung hervor, in der diese eingesetzt werden. Die Lampen weisen integrierte elektronische Schaltungen und aufladbare Batterien auf. Im Falle des Ausfalls der Betriebsspannung wird eine jeweilige Lampe in einem Notbetrieb aus ihrer Batterie betrieben.

Bekannt sind weiters Beleuchtungseinrichtungen, bei denen für den Normalbetrieb und für den Notbetrieb getrennte Beleuchtungssysteme eingesetzt werden. Für das Beleuchtungssystem für den Notbetrieb ist hier der Einsatz von energiesparenden Leuchtdioden bekannt. Das die Leuchtdioden aufweisende Beleuchtungssystem ist mit einem zentralen Steuergerät ausgestattet, welches eine Batterie aufweist, die im Normalbetrieb vom Steuergerät aufgeladen wird. Im Notbetrieb werden die Leuchtdioden eingeschaltet und aus der Batterie versorgt. Die eingesetzten LED-Leuchten weisen hierbei häufig nur eine einzelne Leuchtdiode auf.

Eine Beleuchtungseinrichtung, bei der die nur für die Notbeleuchtung vorgesehenen LED-Leuchten in die Leuchtengehäuse, welche die Leuchtmittel für den Normalbetrieb aufweisen, integriert sind, geht beispielsweise aus der DE 20 2010 005 176 U1 hervor.

Bekannt sind weiters Beleuchtungseinrichtungen ohne Notlichtfunktion, bei denen von einem zentralen Betriebsgerät, das an die Netz-Wechselspannung angeschlossen ist, eine Betriebsspannung, die eine Gleichspannung ist, an die LED-Leuchten ausgegeben wird. Die parallel zueinander betriebenen LED-Leuchten weisen hierbei jeweils eine Mehrzahl von Leuchtdioden als Leuchtmittel auf. Die vom Betriebsgerät ausgegebene Betriebsspannung kann hierbei eine Kleinspannung sein, also unter 120 Volt liegen.

Aufgabe der Erfindung ist es eine zuverlässige, einfache und kostengünstige Beleuchtungseinrichtung mit Notlichtfunktion der eingangs genannten Art bereitzustellen. Erfindungsgemäß gelingt dies durch eine Beleuchtungseinrichtung mit den Merkmalen des Anspruchs 1.

Bei der erfindungsgemäßen Beleuchtungseinrichtung wird den, parallel zueinander betriebenen, LED-Leuchten im Normalbetrieb vom zentralen Betriebsgerät eine Gleichspannung als Betriebsspannung zugeführt. Günstigerweise kann es sich hierbei um eine Kleinspannung handeln, wobei als Kleinspannung bei Gleichspannung üblicherweise eine Spannung von bis zu 120 Volt angesehen wird. Diese gilt beim Berühren für erwachsene Menschen als nicht lebensbedrohlich. Somit wird eine hohe Sicherheit erreicht bzw. kann die Beleuchtungseinrichtung in Hinblick auf die Sicherheitsanforderungen ausgangsseitig des Betriebsgeräts sehr einfach ausgebildet sein. Besonders bevorzugt sind Spannungen von unter 50 Volt DC.

Bei Ausfall der Netzspannung, die beispielsweise im Bereich von 230 V liegen kann, wird vom Betriebsgerät eine aus der Batterie des Betriebsgeräts gespeiste Notbetriebsspannung an die Leuchten ausgegeben, die ebenfalls eine Gleichspannung ist, sich von ihrem Wert her aber von der im Normalbetrieb ausgegebenen Betriebsspannung unterscheidet, vorzugsweise kleiner als die Betriebsspannung ist.

Von der Spannungserkennungseinheit einer jeweiligen Leuchte wird erkannt, ob die Betriebsspannung oder die Notbetriebsspannung an der Leuchte anliegt. Liegt die Notbetriebsspannung an, so wird die von der Leuchte verbrauchte Leistung reduziert, wobei der von der Leuchte abgegebene Lichtstrom verringert wird, entsprechend der üblicherweise im Notbetrieb geforderten, gegenüber dem Normalbetrieb verringerten Beleuchtungsstärke.

Es kann damit die benötigte Kapazität der Batterie des zentralen Betriebsgeräts möglichst gering gehalten werden, wodurch eine kostengünstige Ausbildung ermöglicht wird.

Bei einer erfindungsgemäßen Beleuchtungseinrichtung kann die Erkennung des Notbetriebs und die Verringerung der Leistungsaufnahme einer jeweiligen Leuchte in einfacher Weise ausgebildet sein. Insgesamt kann eine effiziente, einfach ausgebildete und kostengünstige Beleuchtungseinrichtung mit Notlichtfunktion bereitgestellt werden.

In einer vorteilhaften Ausführungsform der Erfindung wird zur Reduktion der Leistungsaufnahme im Notbetrieb ein Teil der Leuchtdioden einer jeweiligen Leuchte von der Spannungserkennungseinrichtung abgeschaltet. Beispielsweise werden alle Leuchtdioden bis auf eine abgeschaltet. Diese Abschaltung kann günstigerweise einfach dadurch erfolgen, dass die abgeschalteten Leuchtdioden überbrückt, d.h. kurzgeschlossen werden, indem von der Spannungserkennungseinheit ein Schalter in einer Bypassleitung zu den abzuschaltenden Leuchtdioden geschlossen wird. In einer anderen möglichen Ausführungsform können die Leuchtdioden einer jeweiligen Leuchte zur Leistungsreduktion von der Spannungserkennungseinheit über eine Pulsweitenmodulation ihres Betriebsstroms betrieben werden. Im Normalbetrieb kann eine solche Pulsweitenmodulation entfallen, sodass die Leuchtdioden kontinu-ierlich betrieben werden, oder es könnte im Normalbetrieb ein gegenüber dem Notbetrieb unterschiedlicher Tastgrad der Pulsweitenmodulation vorgesehen sein.

In einer weiteren möglichen Ausführungsform könnten die Leuchtdioden einer jeweiligen Leuchte zur Leistungsreduktion mit einem gegenüber dem Normalbetrieb verringerten Strom betrieben werden. Hierzu kann die Spannungserkennungseinheit eine steuerbare Stromquelle, welche die Leuchtdioden einer jeweiligen Leuchte mit Strom versorgt, entsprechend ansteuern.

Weitere Vorteile und Einzelheiten der Erfindung werden im Folgenden anhand der beiliegenden Zeichnung erläutert. In dieser zeigen:
Fig. 1 eine schematische Blockdarstellung einer Beleuchtungseinrichtung gemäß der Erfindung;
Fig. 2 eine Blockdarstellung einer der Leuchten der Beleuchtungseinrichtung gemäß einer ersten Ausführungsform;
Fig. 3 eine Blockdarstellung einer Leuchte gemäß einer zweiten Ausführungsform;
Fig. 4 eine Blockdarstellung einer Leuchte gemäß einer dritten Ausführungsform;
Fig. 5 eine Blockdarstellung des Betriebsgeräts der Beleuchtungseinrichtung gemäß einer möglichen Ausführungsform.

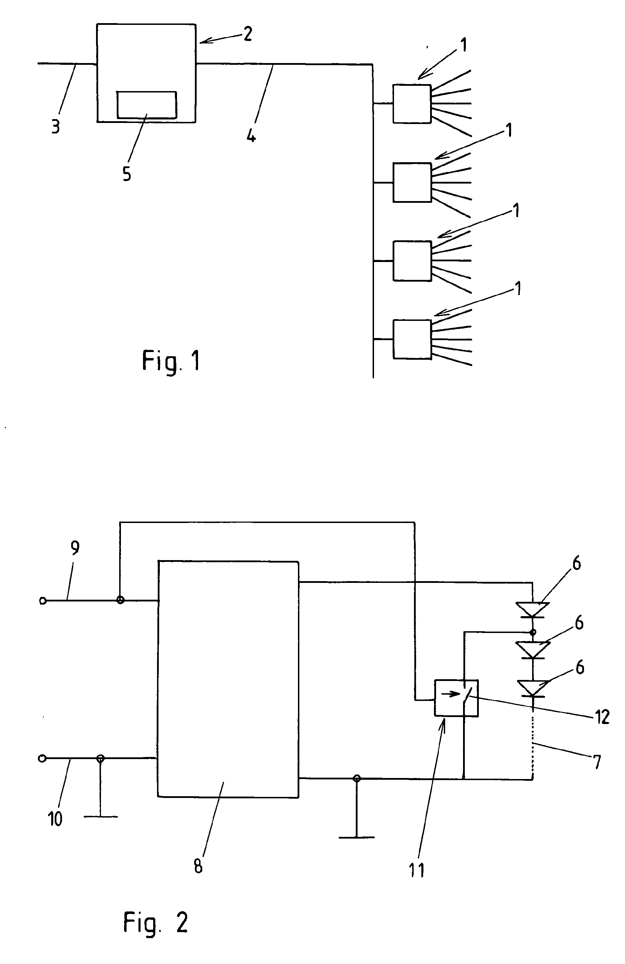

Eine schematische Blockdarstellung einer erfindungsgemäßen Beleuchtungseinrichtung als Ganzes ist in Fig. 1 dargestellt. Die Beleuchtungseinrichtung umfasst eine Mehrzahl von Leuchten 1, von denen in Fig. 1 beispielhaft vier Leuchten 1 eingezeichnet sind. Die Leuchten 1 werden von einem zentralen Betriebsgerät 2 mit einer Betriebsspannung versorgt, wobei die Leuchten 1 parallel zueinander geschaltet sind.

Die Leuchten 1 weisen jeweils mehrere Leuchtdioden (LEDs) als Leuchtmittel auf, wie weiter unten noch genauer ausgeführt wird.

Das Betriebsgerät 2 ist über ein Eingangskabel 3 mit Netzspannung verbunden. Diese kann beispielsweise 230 V +/- 10% betragen. Je nach Stromnetz können auch andere Netzspannungen vorgesehen sein, beispielsweise 110 V oder 100 V.

Bei anliegender Netzspannung wird vom Betriebsgerät 2 eine Betriebsspannung ausgegeben, die eine Gleichspannung ist und vorzugsweise im Kleinspannungsbereich liegt, also weniger als 120 V beträgt, besonders bevorzugt weniger als 50 V. Diese Betriebsspannung wird über das Ausgangskabel 4, das eine Plus- und eine Minus-Leitung umfasst, den Leuchten 1 zugeführt.

Das Betriebsgerät 2 umfasst eine Batterie 5. Im Falle eines Ausfalls der Netzspannung wird von dieser, solange ihr Ladezustand dies erlaubt, eine Energieversorgung für die Leuchten 1 für einen Notbetrieb aufrecht erhalten. In diesem Notbetrieb wird vom Betriebsgerät 2 eine Notbetriebsspannung, die eine Gleichspannung ist, über das Ausgangskabel 4 an die Leuchten 1 ausgegeben. Die Höhe der Notbetriebsspannung unterscheidet sich hierbei von der Höhe der Betriebsspannung. Günstigerweise ist die Notbetriebsspannung niedriger als die Betriebsspannung, vorzugsweise um mindestens 15% niedriger, besonders bevorzugt mindestens 30% niedriger. Es kann auch eine um mehr als 50% unter der Betriebsspannung liegende Notbetriebsspannung vorgesehen sein.

Eine relativ geringe Notbetriebsspannung ermöglicht einen einfachen Einsatz einer relativ kostengünstigen Batterie 5 für den Notbetrieb.

Beispielsweise kann die Betriebsspannung 36 V und die Notbetriebsspannung 12 V betragen.

Wenn an den Leuchten 1 die Notbetriebsspannung anliegt, so wird dies von der Elektronik der Leuchten erkannt und die Leistungsaufnahme der Leuchten 1 wird gegenüber dem Normalbetrieb, in welchem die Betriebsspannung anliegt, reduziert, wie im Folgenden beschrieben wird.

Die Batterie 5 ist günstigerweise als wiederaufladbare Batterie, also als Akkumulator, ausgebildet und wird bei am Betriebsgerät 2 anliegender Netzspannung geladen.

Fig. 2 zeigt eine Blockdarstellung für eine erste mögliche Ausführungsform einer Leuchte 1. Eine jeweilige Leuchte 1 umfasst mehrere Leuchtdioden 6. In Fig. 2 sind drei Leuchtdioden 6 eingezeichnet und weitere Leuchtdioden sind durch eine punktierte Linie 7 angedeutet. Beispielsweise kann die Leuchte 1 zwei bis zwanzig Leuchtdioden 6 aufweisen.

Die Leuchtdioden 6 sind in Serie geschaltet und werden von einer Stromquelle 8 mit einem vorgegebenen Strom versorgt.

Im Normalbetrieb wird der Stromquelle 8 über die Eingangsleitungen 9, 10 die Betriebsspannung zugeführt und der von der Stromquelle 8 ausgegebene Strom fließt durch alle Leuchtdioden 6.

Beispielsweise kann der von der Stromquelle 8 ausgegebene Strom im Normalbetrieb im Bereich von 200 bis 800 mA liegen. Wenn eine Einstellmöglichkeit der Helligkeit der Leuchte 1 vorgesehen sein soll, könnte beispielsweise der von der Stromquelle 8 ausgegebene Strom einstellbar sein. Auch könnte hierzu beispielsweise eine Pulsweitenmodulation des ausgegebenen Stroms durchgeführt werden, wobei der Tastgrad entsprechend der gewünschten Helligkeit eingestellt wird.

Die Leuchte 1 weist weiters eine Spannungserkennungseinheit 11 auf, an der die der Leuchte 1 zugeführte Gleichspannung anliegt. Die Spannungserkennungseinheit 11 erkennt, ob der Leuchte 1 die Betriebsspannung oder die sich hiervon unterscheidende Notbetriebsspannung zugeführt wird. Die Spannungserkennungseinheit 11 umfasst einen Schalter 12. Dieser wird von der Spannungserkennungseinheit 11 geöffnet, wenn die Betriebsspannung anliegt, und geschlossen, wenn die Notbetriebsspannung anliegt. Im geschlossenen Zustand des Schalters 12 werden alle außer einer der Leuchtdioden 6 überbrückt bzw. kurzgeschlossen, d.h. eine Bypassleitung zu den zu überbrückenden Leuchtdioden 1 wird vom Schalter 12 geschlossen. Der von der Stromquelle 8 ausgegebene Strom fließt somit nurmehr durch die nicht kurzgeschlossene Leuchtdiode 6, welche als einzige Leuchtdiode weiterhin leuchtet. Dadurch werden die von der Leuchte 1 aufgenommene Leistung und der von der Leuchte 1 abgegebene Lichtstrom reduziert. Im Notbetrieb wird somit die Beleuchtungsstärke verringert.

Es könnten im Notbetrieb auch mehr als nur eine der Leuchtdioden 6 nicht kurzgeschlossen werden, sodass im Notbetrieb zwei oder mehr der Leuchtdioden 6 leuchten.

Der Schalter 12 ist hier in die Spannungserkennungseinheit 11 integriert. Es könnte auch ein separater Schalter 12 vorgesehen sein, der von der Spannungserkennungseinheit 11 angesteuert wird.

Günstigerweise ist vorgesehen, dass die Spannungserkennungseinheit 11 die an der Leuchte anliegende Eingangsspannung über eine gewisse Bandbreite um einen Spannungsreferenzwert, beispielsweise über einen Bereich von +/- 10% um den Spannungsreferenzwert, als die im Normalbetrieb vorliegende Betriebsspannung interpretiert. Wenn die anliegende Spannung unterhalb dieser Bandbreite liegt (für die bevorzugte Ausbildung, in welcher die Notbetriebsspannung geringer als die Betriebsspannung ist) bzw. wenn die anliegende Spannung oberhalb dieser Bandbreite liegt (für die alternativ mögliche Ausbildung, in welchem die Notbetriebsspannung höher als die Betriebsspannung ist), wird die anliegende Spannung von der Spannungserkennungseinheit 11 als Notbetriebsspannung interpretiert.

Die von den Leuchtdioden 6 gebildeten Leuchtmittel zusammen mit der sie ansteuernden Elektronik können als Leuchteinheit der Leuchte 1 bezeichnet werden.

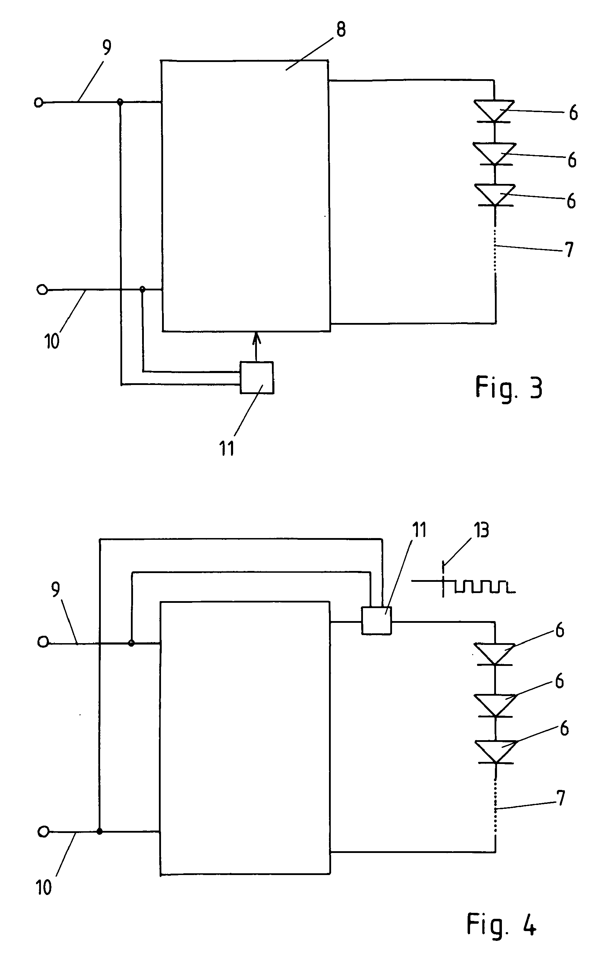

Fig. 3 zeigt eine zweite mögliche Ausführungsform einer Leuchte 1. Diese entspricht abgesehen von den im Folgenden beschriebenen Unterschieden der zuvor beschriebenen Ausführungsform.

Die Spannungserkennungseinheit 11, an der wiederum die der Leuchte 1 zugeführte Spannung anliegt, steuert hier die Stromquelle 8. Hierbei wird der von der Stromquelle 8 ausgegebene Strom von der Spannungserkennungseinheit 11 reduziert, wenn die Spannungserkennungseinheit eine Änderung der Eingangsspannung von der Betriebsspannung zur Notbetriebsspannung erkennt. Vorteilhafterweise wird hierbei der von der Stromquelle 8 ausgegebene Strom um mehr als 50 % reduziert. Beispielsweise kann der von der Stromquelle 8 ausgegebene Strom von 500 mA auf 100 mA reduziert werden.

Alternativ könnte auch vorgesehen sein, dass die Spannungserkennungseinheit 11, wenn diese das Anliegen der Notbetriebsspannung erkennt, eine Pulsweitenmodulation des von der Stromquelle 8 ausgegebenen Stroms durchführt. Hierzu schaltet die Spannungserkennungseinheit 11 die Stromquelle 8 mit einem vorgegebenen Tastgrad an und aus (oder auch zwischen zwei unterschiedlich großen Stromwerten um). Im Normalbetrieb kann hierbei ein kontinuierlicher Betrieb der Stromquelle 8 oder ein pulsweitenmodulierter Betrieb der Stromquelle 8 mit einem unterschiedlichen Tastgrad (bei dem das Verhältnis zwischen den An-Zeiten und den Aus-Zeiten größer als im Notbetrieb ist) vorgesehen sein.

Fig. 4 zeigt eine weitere mögliche Ausbildungsform einer Leuchte 1. Abgesehen von den im Folgenden beschriebenen Unterschieden entspricht diese der anhand von Fig. 2 beschriebenen Ausführungsform.

Die Spannungserkennungseinheit 11, an der die der Leuchte 1 zugeführte Spannung anliegt, führt hier eine Pulsweitenmodulation des von der Stromquelle 8 ausgegebenen Stroms durch, wenn die Spannungserkennungseinheit 11 das Anliegen der Notbetriebsspannung erkennt. Dadurch wird die von den Leuchtdioden 6 aufgenommene Leistung bzw. der von ihnen abgegebene Lichtstrom entsprechend dem vorgegebenen Tastgrad reduziert. Die Pulsweitenmodulation kann durch Öffnen und Schließen eines in die Spannungserkennungseinheit 11 integrierten oder von dieser separaten Schalters erfolgen, der den Stromfluss durch die zwischen der Stromquelle 8 und den Leuchtdioden 6 verlaufende Leitung entsprechend unterbricht. Im Normalbetrieb kann dieser Schalter geschlossen sein, sodass der von der Stromquelle 8 ausgegebene Strom kontinuierlich fließt. Dies ist in Fig. 4 oberhalb der Leitung, in der die Spannungserkennungseinheit 11 angeordnet ist, schematisch dargestellt, wobei der Wechsel vom Normalbetrieb in den Notbetrieb durch eine strichlierte Linie 13 angedeutet ist. Im Normalbetrieb könnte der von der Stromquelle 8 ausgegebene Strom von der Spannungserkennungseinheit 11 aber ebenfalls pulsweitenmoduliert werden, wobei sich der Tastgrad vom Notbetrieb entsprechend unterscheidet (derart, dass das Verhältnis zwischen den An-Zeiten und Aus-Zeiten gegenüber dem Notbetrieb größer ist).

Weitere Ausbildungen von Leuchten mit einer auf die Höhe der Eingangsspannung ansprechende Spannungserkennungseinheit, die bei Anliegen der Notbetriebsspannung die aufgenommene Leistung gegenüber dem Zustand, in dem die Betriebsspannung anliegt, reduziert, sind denkbar und möglich.

Unterschiedliche Ausbildungsformen von solchen Leuchten 1, die beispielsweise in der anhand der Fig. 2 bis 4 beschriebenen Art ausgebildet sind, können in einer erfindungsgemäßen Beleuchtungseinrichtung auch in Kombination eingesetzt werden.

Die Beleuchtungseinrichtung könnte zusätzlich auch mindestens eine Leuchte umfassen, deren Leistungsaufnahme im Notbetrieb nicht reduziert wird.

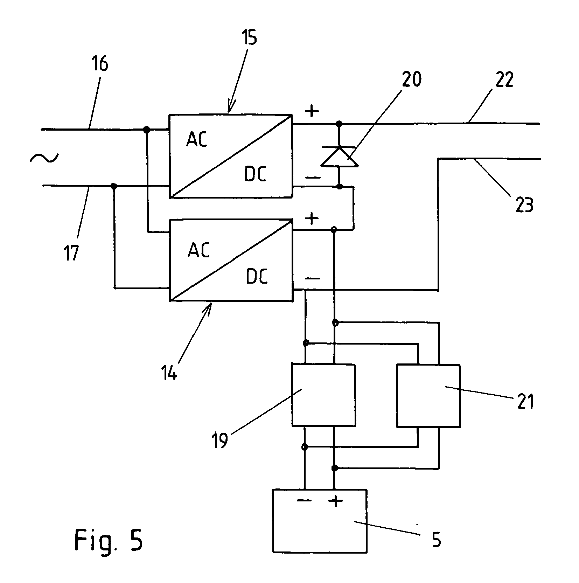

Fig. 5 zeigt eine Blockdarstellung einer möglichen Ausbildungsform für das zentrale Betriebsgerät 2. In dieser Ausführungsform umfasst das Betriebsgerät 2 erste und zweite Netzteile 14, 15, die AC/DC-Wandler bilden bzw. aufweisen. Die Ausgänge der Netzteile 14, 15 sind hintereinander geschaltet, sodass die Summe ihrer Spannungen die im Normalbetrieb ausgegebene Betriebsspannung ergibt. Die an den Eingangsleitungen 16, 17 anliegende Netz-Wechselspannung wird den Netzteilen 14, 15 parallel zugeführt.

Das Betriebsgerät 2 umfasst eine aufladbare Batterie 5. Diese wird im Normalbetrieb über eine Batterieladeeinheit 19 aufgeladen bzw. wird aufgeladener Zustand von der Batterieladeeinheit 19 erhalten.

Die Batterieladeeinheit 19 ist vorzugsweise an den Ausgang von einem der Netzteile angeschlossen, im Ausführungsbeispiel an die beiden Ausgangsleitungen des ersten Netzteils 14. Die Spannung der aufgeladenen Batterie 5 entspricht günstigerweise im Wesentlichen der vom ersten Netzteil 14 ausgegebenen Spannung.

Zwischen die beiden Ausgangsleitungen des zweiten Netzteils 15 ist eine Diode 20 gehängt. Deren Durchgangsrichtung ist hierbei so gewählt, dass im Normalbetrieb, wenn vom Netzteil 15 eine Ausgangsspannung ausgegeben wird, der Durchgang durch diese Diode 20 gegenüber dieser vom Netzteil 15 ausgegebenen Ausgangsspannung gesperrt ist.

Das Betriebsgerät 2 umfasst weiters eine Schalteinheit 21. Wenn die dem Betriebsgerät 2 zugeführte Netzspannung ausfällt, so legt die Schalteinheit 21 den Plus-Pol der Batterie 5 an den positiven Ausgang des ersten Netzteils 14 und den Minus-Pol der Batterie 5 an den negativen Ausgang des ersten Netzteils 14. Die Diode 20 ist gegenüber der von der Batterie 5 abgegebenen Spannung somit in Durchgangsrichtung geschaltet (ebenso wie im Normalbetrieb gegenüber der vom ersten Netzteil 14 abgegebenen Spannung), sodass nunmehr an den Ausgangsleitungen 22, 23 des Betriebsgeräts 2 die Batteriespannung 18 anliegt, welche die Notbetriebsspannung darstellt.

Vorzugsweise ist die vom ersten Netzteil 14 ausgegebene Spannung kleiner als die vom zweiten Netzteil 15 ausgegebene Spannung. Beispielsweise kann die vom ersten Netzteil 14 ausgegebene Spannung 12V und die vom zweiten Netzteil 15 ausgegebene Spannung 24V betragen.

Eine erfindungsgemäße Beleuchtungseinrichtung kann beispielsweise als Baustellenbeleuchtung, z.B. in einem Tunnel eingesetzt werden.

### Legende

### zu den Hinweisziffern:

- 1: Leuchte
- 2: Betriebsgerät
- 3: Eingangskabel
- 4: Ausgangskabel
- 5: Batterie
- 6: Leuchtdiode
- 7: punktierte Linie
- 8: Stromquelle
- 9: Eingangsleitung
- 10: Eingangsleitung
- 11: Spannungserkennungseinheit
- 12: Schalter
- 13: strichlierte Linie
- 14: erstes Netzteil
- 15: zweites Netzteil
- 16: Eingangsleitung
- 17: Eingangsleitung
- 19: Batterieladeeinheit
- 20: Diode
- 21: Schalteinheit
- 22: Ausgangsleitung
- 23: Ausgangsleitung

## Patentansprüche

1. Beleuchtungseinrichtung mit einer Mehrzahl von Leuchten (1), die Leuchtdioden (6) als Leuchtmittel aufweisen und die in einem Normalbetrieb von einem gemeinsamen, an Netzspannung anzuschließenden Betriebsgerät (2) mit einer Betriebsspannung versorgt werden, welche den Leuchten (1) als Eingangsspannung zugeführt wird, wobei das Betriebsgerät (2) für den Fall eines Ausfalls der Netzspannung eine Batterie (5) zur Aufrechterhaltung eines Notbetriebs aufweist und den Leuchten (1) im Notbetrieb vom Betriebsgerät (2) als Eingangsspannung eine Notbetriebsspannung zugeführt wird, die eine Gleichspannung ist, **dadurch gekennzeichnet, dass** die vom Betriebsgerät (2) im Normalbetrieb den Leuchten (1) als Eingangsspannung zugeführte Betriebsspannung eine Gleichspannung ist, wobei die Höhe der im Notbetrieb den Leuchten (1) vom Betriebsgerät (2) als Eingangsspannung zugeführten Gleichspannung sich von der Höhe der im Normalbetrieb den Leuchten (1) vom Betriebsgerät (2) als Eingangsspannung zugeführten Gleichspannung unterscheidet, und dass zumindest einige der Leuchten (1), vorzugsweise alle Leuchten (1), zusätzlich zu den Leuchtdioden (6) eine Spannungserkennungseinheit (11) aufweisen, an welcher die der Leuchte (1) zugeführte Gleichspannung anliegt und welche in Abhängigkeit von der Höhe der anliegenden Gleichspannung das Vorliegen des Normalbetriebes oder des Notbetriebes erkennt und im Notbetrieb die von der Leuchte (1) aufgenommene Leistung durch Reduktion des von der Leuchte (1) abgegebenen Lichtstroms gegenüber dem Normalbetrieb verringert.

2. Beleuchtungseinrichtung nach Anspruch 1, **dadurch gekennzeichnet, dass** bei zumindest einigen der Leuchten (1), vorzugsweise allen Leuchten (1), zur Reduktion des Lichtstroms im Notbetrieb von der Spannungserkennungseinheit (11) ein Teil der Leuchtdioden (6) der Leuchte (1) abgeschaltet wird.

3. Beleuchtungseinrichtung nach Anspruch 2, **dadurch gekennzeichnet, dass** die abzuschaltenden Leuchtdioden (6) durch Schließen eines Schalters (12) überbrückt werden.

4. Beleuchtungseinrichtung nach einem der Ansprüche 1 bis 3, **dadurch gekennzeichnet, dass** bei zumindest einigen der Leuchten (1), vorzugsweise allen Leuchten (1), zur Reduktion des Lichtstroms die Leuchtdioden (6) der Leuchte im Notbetrieb von der Spannungserkennungseinheit (11) im Pulsweitenmodulationsbetrieb betrieben werden.

5. Beleuchtungseinrichtung nach einem der Ansprüche 1 bis 4, **dadurch gekennzeichnet, dass** bei zumindest einigen der Leuchten (1), vorzugsweise allen Leuchten (1), die Spannungserkennungseinheit (11) eine Stromquelle (8), die die Leuchtdioden (6) der Leuchte (1) mit Strom versorgt, ansteuert und dass die Spannungserkennungseinheit (11) zur Reduktion des von der Leuchte abgegebenen Lichtstroms den von der Stromquelle (8) an die Leuchtdioden (6) ausgegebenen Strom im Notbetrieb gegenüber dem Normalbetrieb verringert oder pulsweitenmoduliert.

6. Beleuchtungseinrichtung nach einem der Ansprüche 1 bis 5, **dadurch gekennzeichnet, dass** die Notbetriebsspannung niedriger als die Betriebsspannung ist, vorzugsweise um mindestens 15% niedriger.

7. Beleuchtungseinrichtung nach einem der Ansprüche 1 bis 6, **dadurch gekennzeichnet, dass** die Betriebsspannung kleiner als 120 V, vorzugsweise kleiner als 50 V ist.

8. Beleuchtungseinrichtung nach einem der Ansprüche 1 bis 7, **dadurch gekennzeichnet, dass** das Betriebsgerät (2) ein erstes und ein zweites Netzteil (14, 15) umfasst, deren Ausgänge in Serie geschaltet sind und die zusammen im Normalbetrieb die Betriebsspannung ausgeben und von denen eines im Normalbetrieb die Batterie auflädt, wobei die im Notbetrieb ausgegebene Notbetriebsspannung der Batteriespannung entspricht.

9. Beleuchtungseinrichtung nach Anspruch 8, **dadurch gekennzeichnet, dass** die Ausgangsleitungen des anderen Netzteils (15) durch eine Diode (20) verbunden sind, deren Durchgang im Normalbetrieb gegenüber der von diesem anderen Netzteil (15) ausgegebenen Spannung gesperrt ist.

10. Beleuchtungseinrichtung nach einem der Ansprüche 1 bis 9, **dadurch gekennzeichnet, dass** die Leuchtdioden (6) einer jeweiligen Leuchte (1) in Serie geschaltet sind.

11. Beleuchtungseinrichtung nach einem der Ansprüche 1 bis 10, **dadurch gekennzeichnet, dass** die Leuchten (1) jeweils eine Stromquelle (8) zur Stromversorgung der Leuchtdioden (6) aufweisen.

## Claims

1. Illumination device with a plurality of lamps (1) which use LEDs (6) as illuminants and which, in normal operation, are supplied by a common operating unit (2) connected to the mains voltage with an operating voltage which is supplied to the lamps (1) as input voltage, wherein the operating unit (2) has a battery (5) for maintaining an emergency operation in the event of failure of the mains voltage and, in emergency operation, the lamps (1) are supplied by the operating unit (2) with an emergency operation voltage as input voltage which is a DC voltage, **characterised in that** the operating voltage supplied to the lamps (1) by the operating unit (2) as input voltage in normal operation is a DC voltage, wherein the level of the DC voltage supplied to the lamps (1) by the operating unit (2) as input voltage in emergency operation differs from the level of the DC voltage supplied to the lamps (1) by the operating unit (2) as input voltage in normal operation and that at least some of the lamps (1), preferably all of the lamps (1), have, in addition to the LEDs (6), a voltage detection unit (11) to which the DC voltage fed to the lamp (1) is applied and which detects whether the lamp is in normal operation or in emergency operation depending on the level of the applied DC voltage and, in emergency operation, reduces the power consumed by the lamp (1) by reducing the luminous flux output by the lamp (1) in comparison with normal operation.

2. Illumination device according to claim 1, **characterised in that**, in at least some of the lamps (1), preferably all of the lamps (1), in order to reduce the luminous flux in emergency operation some of the LEDs (6) of the lamp (1) are switched off by the voltage detection unit (11).

3. Illumination device according to claim 2, **characterised in that** the LEDs (6) which are to be switched off are bridged through closing of a switch (12).

4. Illumination device according to one of the claims 1 to 3, **characterised in that**, in at least some of the lamps (1), preferably all of the lamps (1), in order to reduce the luminous flux in emergency operation, the LEDs (6) of the lamp are operated in pulse width modulation mode by the voltage detection unit (11).

5. Illumination device according to one of the claims 1 to 4, **characterised in that**, in at least some of the lamps (1), preferably all of the lamps (1), the voltage detection unit (11) controls a current source (8) which supplies the LEDs (6) of the lamp (1) with current and that in order to reduce the luminous flux output by the lamp in emergency operation the voltage detection unit (11) reduces or pulse-width-modulates the current ouput by the current source (8) to the LEDs (6) in comparison with normal operation.

6. Illumination device according to one of the claims 1 to 5, **characterised in that** the emergency operation voltage is lower than the operating voltage, preferably by at least 15%.

7. Illumination device according to one of the claims 1 to 6, **characterised in that** the operating voltage is less than 120 V, preferably less than 50 V.

8. Illumination device according to one of the claims 1 to 7, **characterised in that** the operating unit (2) comprises a first and a second power supply unit (14, 15), the outputs of which are connected in series and which output the operating voltage together in normal operation and one of which charges the battery in normal operation, wherein the emergency operation voltage output in emergency operation corresponds to the battery voltage.

9. Illumination device according to claim 8, **characterised in that** the output lines of the other power supply unit (15) are connected via a diode (20), passage of which is blocked to the voltage output by this other power supply unit (15) in normal operation.

10. Illumination device according to one of the claims 1 to 9, **characterised in that** the LEDs (6) of a lamp (1) are connected in series.

11. Illumination device according to one of the claims 1 to 10, **characterised in that** the lamps (1) each have a current source (8) for supplying power to the LEDs (6).

## Revendications

1. Dispositif d'éclairage comportant une pluralité de luminaires (1) présentant des diodes luminescentes (6) en tant que moyen d'éclairage et alimentés, dans un fonctionnement normal, par un équipement (2) commun à brancher sur la tension réseau avec une tension de fonctionnement acheminée vers les luminaires (1) en tant que tension d'entrée, l'équipement (2), pour un cas de panne de tension réseau, présentant une batterie (5) pour le maintien d'un fonctionnement de secours et une tension de fonctionnement de secours, étant une tension continue, étant acheminée, par l'équipement (2) vers les luminaires (1), en tant que tension d'entrée, **caractérisé en ce que** la tension de fonctionnement acheminée par l'équipement (2) en fonctionnement normal aux luminaires (1) en tant que tension d'entrée, est une tension continue, la hauteur de la tension continue acheminée par l'équipement (2) aux luminaires (1) en tant que tension d'entrée en fonctionnement de secours se distinguant de la hauteur de la tension continue acheminée par l'équipement (2) aux luminaires (1) en tant que tension d'entrée en fonctionnement normal et **en ce qu'**au moins quelques-uns des luminaires (1), de préférence tous les luminaires (1), présentent, en plus des diodes luminescentes (6), un module de détection de tension (11) auquel est appliquée la tension continue acheminée au luminaire (1) et qui détecte, en fonction de la hauteur de la tension continue appliquée, la présence du fonctionnement normal ou du fonctionnement de secours et, en fonctionnement de secours, diminue la puissance absorbée par le luminaire (1) en réduisant le courant lumineux délivré par le luminaire (1) par rapport au fonctionnement normal.

2. Dispositif d'éclairage selon la revendication 1, **caractérisé en ce que** le module de détection de tension (11) éteint une partie des diodes luminescentes (6) du luminaire (1) sur au moins quelques-uns des luminaires (1), de préférence sur tous, afin de réduire le courant lumineux en fonctionnement normal.

3. Dispositif d'éclairage selon la revendication 2, **caractérisé en ce que** les diodes luminescentes (6) à éteindre sont pontées par la fermeture d'un interrupteur (12).

4. Dispositif d'éclairage selon l'une quelconque des revendications 1 à 3, **caractérisé en ce que**, en fonctionnement de secours, le module de détection de tension (11) fait fonctionner les diodes luminescentes (6) du luminaire en fonctionnement de modulation de largeur d'impulsion au moins sur quelques-uns des luminaires (1), de préférence sur tous les luminaires, afin de réduire le courant lumineux.

5. Dispositif d'éclairage selon l'une quelconque des revendications 1 à 4, **caractérisé en ce que**, sur au moins quelques-uns des luminaires (1), de préférence sur tous les luminaires, le module de détection de tension (11) commande une source de courant (8) qui alimente en courant les diodes luminescentes (6) du luminaire (1) et **en ce que** le module de détection de tension (11) diminue, en fonctionnement de secours par rapport au fonctionnement normal, le courant délivré par la source de courant (8) aux diodes luminescentes (6) ou en module la largeur d'impulsion afin de réduire le courant lumineux délivré par le luminaire.

6. Dispositif d'éclairage selon l'une quelconque des revendications 1 à 5, **caractérisé en ce que** la tension de fonctionnement de secours est inférieure à la tension de fonctionnement, de préférence inférieure d'au moins 15 %.

7. Dispositif d'éclairage selon l'une quelconque des revendications 1 à 6, **caractérisé en ce que** la tension de fonctionnement est inférieure à 120 V, de préférence inférieure à 50 V.

8. Dispositif d'éclairage selon l'une quelconque des revendications 1 à 7, **caractérisé en ce que** l'équipement (2) comprend un premier et un deuxième bloc d'alimentation (14, 15) dont les sorties sont branchées en série et qui, ensemble, délivrent la tension de fonctionnement en fonctionnement normal et dont l'un charge la batterie en fonctionnement normal, la tension de fonctionnement de secours délivrée en fonctionnement de secours correspondant à la tension de la batterie.

9. Dispositif d'éclairage selon la revendication 8, **caractérisé en ce que** les câbles de sortie de l'autre bloc d'alimentation (15) sont reliés par une diode (20) dont la traversée en fonctionnement normal est bloquée par rapport à la tension délivrée par cet autre bloc d'alimentation (15).

10. Dispositif d'éclairage selon l'une quelconque des revendications 1 à 9, **caractérisé en ce que** les diodes luminescentes (6) d'un luminaire (1) sont branchées en série.

11. Dispositif d'éclairage selon l'une quelconque des revendications 1 à 10, **caractérisé en ce que** les luminaires (1) présentent chacun une source de courant (8) pour l'alimentation en courant des diodes luminescentes (6).
